# EUROPEAN PATENT SPECIFICATION

(11) **EP 2 185 634 B1**
(45) Date of publication and mention of the grant of the patent: **01.12.2010**
(21) Application number: 08835788.4
(22) Date of filing: 24.09.2008
(51) Int. Cl.: C08J 5/06, C08J 5/04

(54) **REINFORCING FIBER BUNDLES FOR MAKING FIBER REINFORCED POLYMER COMPOSITES**
VERSTÄRKENDE FASERBÜNDEL ZUR HERSTELLUNG VON FASERVERSTÄRKTEN POLYMERVERBUNDSTOFFEN
FAISCEAUX DE FIBRES DE RENFORCEMENT POUR FABRIQUER DES COMPOSITES POLYMÉRIQUES RENFORCÉS PAR FIBRE

(30) Priority: 04.10.2007 US 977507 P
(43) Date of publication of application: 19.05.2010
(73) Proprietor: Invista Technologies S.à.r.l., 9000 St. Gallen (CH)
(72) Inventor: SCHMITT, Thomas, Edward, Concord NC 28027-8867 (US); BARNES, John, Alan, Dymock, Gloucestershire GL18 2AD (GB)
(74) Representative: Cockerton, Bruce Roger
(86) International application number: PCT/US2008/077475
(87) International publication number: WO 2009/045807

(56) References cited:
- WO-A-01/10618
- WO-A-02/053629
- US-A1- 2004 124 556

## Description

### FIELD OF THE INVENTION

The present invention relates to bundles of short-cut organic reinforcement fibers suitable for volumetric or gravimetric metering into a compounding process used to produce fiber-reinforced polymer composites.

### BACKGROUND OF THE INVENTION

Inorganic fibers such as glass are commonly used as reinforcing fibers in both thermoplastic and thermoset polymer composites. The glass reinforcing fibers Improve the modulus, strength and heat deflection temperature of the composite. However these brittle fibers lead to a lower elongation at break and low impact strength, especially at low temperatures. In typical resin compounding operations for thermoplastic polymers, glass fiber (1.5 to 3mm chopped or continuous filament roving) is mixed with the thermoplastic polymer in a compounding extruder. In the case of filament roving, the extruder acts as a means to break the brittle glass roving into small lengths.

Synthetic organic polymer fibers and/or natural cellulose-based fibers can also be used as reinforcement in polymer composites and serve to improve the cold impact resistance of the composite. For example, PCT Published Patent Application WO 02/053629 describes extrudable and moldable polymeric compounds that contain a thermoplastic polyolefin matrix in which PET reinforcing fibers and talc filler are dispersed. Inclusion of PET fibers is shown to improve the cold impact strength of the molded compound. Improvements in impact strength do not require adhesion between the reinforcing fibers and polyolefin matrix polymer.

Short cut high strength polymer fibers can be produced by cutting high strength industrial yarns, and compressing these into a bale. However, when a processor attempts to meter these cut fibers into a compounding extruder, there is a tendency for the fibers to clump together giving non-uniform fiber content and poor fiber distribution in the compounded resin. Poor distribution results in poorer physical properties and surface appearance from the molded composite.

For example, U.S. Patent No. 3,639,424 describes extrudable and moldable polypropylene and polyethylene compositions in which short cut polyethylene terephthalate (PET) reinforcing fibers are dispersed. The '424 patent notes that unlike glass fibers, other synthetic polymer fibers do not disperse well in the polymer but tend to clump together in fiber aggregates, resulting in non-uniformity of dispersion of the fibers in the molded product.

Published U.S. Patent Application No. 2006/0261509 to Lustiger illustrates the difficulty of metering cut polyester fibers into a compounding extruder. As noted in this application, gravimetric or vibrational feeders are typically used for metering and conveying polymers, fillers and additives into a compounding extruder. These feeders are effective in conveying pellets or powder, but are not particularly well suited for conveying cut polymer fiber, since the cut fiber tends to clump up or bridge, resulting in an inconsistent feed rate into the compounding process. To overcome this problem, this application proposes to meter continuous strands of polyester directly into the compounding extruder where the strands will be broken by the action of the extruder screw. While this approach is used successfully with brittle fibers such as glass, the high toughness (i.e. high fiber strength and elongation) of the polyester reinforcing fibers present difficulties, since the extruder screw may neither completely nor uniformly break the fiber strands during a high throughput compounding process.

U.S. Patent No. 6,202,947 to Matsumoto et al. provides another approach to metering reinforcing fibers wherein a tow cutter is located at a feed port of the compounding extruder. The cutter speed is regulated to deliver the necessary quantity of fiber to the extruder. However, modifications are required to the feed hopper and discharge device to accommodate such fibers.

### SUMMARY OF THE INVENTION

According to the present invention, short-cut synthetic organic or cellulose-based natural reinforcing fiber for a polymer composite is provided in a form that feeds uniformly to a compounding process using conventional volumetric or gravimetric metering equipment. In the compounding process which can include the use of a single or twin screw extruder or a double armed batch mixer, such reinforcing fiber disperses and becomes uniformly distributed in a matrix resin during the compounding process. As used herein, synthetic fibers shall mean synthetic fibers produced or derived from an organic polymer and shall specifically include carbon fibers. Further, as used herein, cellulose-based natural reinforcing fibers shall include yarn-forming natural bast, leaf, or seed hair fibers.

The reinforcing fibers are provided in the form of cut fiber bundles with a finish composition coating the fibers and forming fugitive inter-fiber bonds between the fibers within each cut fiber bundle. The finish provides inter-fiber coherency and raises the bulk density of the bundles such that a mass of the cut fiber bundles can be fed uniformly by a volumetric (loss-in-volume) or a gravimetric (loss-in-weight) screw feeder device and from this screw feeder device flow to a compounding process. Upon mixing in the compounding process with a matrix polymer, the fugitive bonds will break and the cut fiber bundles disintegrate into separate individual fibers dispersed in the matrix polymer.

In one advantageous embodiment of the present invention, a composition for making a fiber reinforced polymer composite is provided. Such a composition comprises a mass of cut fiber bundles, substantially all of which have a length between 3 and 15 mm and with the mass of bundles having an average bulk density of at least 0.26 g/cm³ (16 pounds per cubic foot). Substantially all of the cut fiber bundles comprise a plurality of synthetic or cellulose-based natural fibers of the same length oriented substantially parallel to one another and having their ends coextensive with one another. Substantially all of the bundles also comprise a finish composition which coats the fibers and forms fugitive inter-fiber bonds within each cut fiber bundle providing inter-fiber coherency. Such fugitive inter-fiber bonding by the finish composition permits the mass of cut fiber bundles to be fed uniformly by a volumetric (loss-in-volume) or gravimetric (loss-in-weight) screw feeder device into a compounding screw extruder which also contains a matrix polymer. Upon mixing in the compounding screw extruder with the matrix polymer, the fugitive bonds can break and the cut fiber bundles can disintegrate into separate individual fibers dispersed in the thermoplastic matrix polymer. The mass of cut fiber bundles is flowable and feedable via a volumetric (loss-in-volume) or a gravimetric (loss-in-weight) screw feeder device at such uniformity that the screw feeder device preferably requires no more than a ± 10% change in screw RPM or of a ± 10% weight variation in the feed rate.

In a further aspect of the present invention, there is provided a process for making a fiber-containing composition for compounding with a polymer matrix to in turn form a fiber-reinforced polymer composite. The process includes steps of coating a plurality of synthetic multifilament strands or strands of cellulose-based natural fiber yarns or rovings with a finish composition that forms fugitive inter-filament bonds within the strands; cutting the strands of bonded filaments into cut fiber bundles having a length between 3 and 15 mm, with each cut fiber bundle containing a plurality of fugitively bonded fibers; and forming a flowable mass of the individual cut fiber bundles to provide a bundle mass having an average bulk density of at leas 0.26 g/cm³ (16 pounds per cubic foot). In a separate operation, the flowable mass of cut fiber bundles can be deposited in a feed hopper of a volumetric (loss-in-volume) or a gravimetric (loss-in-weight) screw feeder device which is in mass transport communication with a compounding process. The compounding process can be carried out using a single or twin screw extruder or a double armed batch mixer, e.g., a Sigma blade mixer. A matrix polymer is also fed to the compounding process. The flowable mass of cut fiber bundles can be fed to the compounding process via the screw feeder device, with the finish composition providing inter-fiber coherency so that the fugitively bonded cut fiber bundles are fed uniformly by the screw feeder device to the compounding process. Upon mixing in the compounding process, the fugitive bonds break and the cut fiber bundles disintegrate Into separate individual fibers dispersed in the matrix polymer. Preferably the step of feeding the flowable mass of cut fiber bundles includes feeding the cut fiber bundles at such uniformity that the screw feeder device requires no more than a ± 10% change in screw RPM or a ± 10% weight variation in feeding rate.

Preferably the multifilament strands each contain 100 to 400 continuous filaments having a linear mass of from 5 to 22 dtex per filament. The coating can be performed by advancing the multifilament strands past a coating station containing a liquid finish composition, applying the liquid finish composition to the continuous multifilament strands at the coating station and impregnating the respective strands with the finish composition, and drying the finish composition to form fugitive inter-filament bonds within the strands. The drying step suitably includes exposing the coated multifilament strands to heat to dry the finish composition. In one advantageous embodiment, the drying step comprises directing the coated multifilament strands over a series of heated drums, and the cutting step includes advancing the coated multifilament strands directly from the series of heated drums to a cutter device and cutting the strands into the cut fiber bundles. In another embodiment, an oven replaces the heated drying drums.

The finish composition is preferably applied In an amount from 0.5 to 10 weight percent based on the total weight of the coated multifilament strands, and preferably comprises an aqueous-based thermoplastic emulsion which can be dried by heating.

In one specific embodiment, the process includes steps of withdrawing from a creel device a plurality of multifilament strands of polyethylene terephthalate polymer, each strand comprising 100 to 400 continuous filaments with a linear mass of from 5 to 22 dtex per filament. The plurality of multifilament strands is advanced from the creel device to and through a coating station and a finish composition in the form of an aqueous emulsion of a thermoplastic polymer is thereby applied to the multifilament strands. This is followed by advancing the coated multifilament strands to a drying station and heating the strands to cause the finish composition to dry and to form fugitive inter-filament bonds within each strand. The multifilament strands are then advanced from the drying station to a cutting station where the strands are cut into cut fiber bundles having a length between 3 and 15 mm, with each cut fiber bundle containing a plurality of fugitively bonded fibers. The thus-formed cut fiber bundles, with an average bulk density of at least 0.26 g/cm³ (16 pounds per cubic foot) are collected as a flowable mass of cut fiber bundles and packaged for bulk shipment. The fibers are later deposited in a feed hopper of a volumetric (loss-in-volume) or a gravimetric (loss-in-weight) screw feeder device which can be connected to a single or twin screw extruder or double armed batch mixer to carry out a compounding process. The compounding process is also fed with a thermoplastic matrix polymer such as polypropylene or a thermosetting matrix polymer such as vinyl ester. The flowable mass of cut fiber bundles is fed into the compounding screw extruder via the screw feeder device, with the finish composition providing inter-fiber coherency so that the fugitively bonded cut fiber bundles are fed uniformly by the screw feeder device into the compounding screw extruder. Upon mixing in a compounding single or twin screw extruder or in a double armed batch mixer, the fugitive bonds break, and the cut fiber bundles disintegrate into separate individual fibers dispersed in the matrix polymer.

### BRIEF DESCRIPTION OF THE DRAWINGS

Having thus described the invention in general terms, reference will now be made to the accompanying drawings, which are not necessarily drawn to scale, and wherein:
FIG. 1 is a perspective view illustrating a mass of cut fiber bundles according to the present invention, which bundles are suited for being uniformly fed to a compounding process using conventional gravimetric (loss-in-weight) or volumetric (loss-in-volume) screw feeders;
FIG. 2 is an enlarged perspective view of one of the cut fiber bundles;
FIG 3 is an enlarged perspective view of cut fiber bundles according to another embodiment of the present invention;
FIGS. 4A and 4B are plan and elevation views respectively illustrating an apparatus for producing the cut fiber bundles;
FIG. 5 is a schematic illustration of a typical compounding screw extruder for producing a fiber reinforced polymer composite;
FIG. 6 is an illustration of a fiber flowability tester; and
FIG 7 is a graph showing the variation in fiber feed rate and the percent of maximum feeder speed for the test performed in Example 2.

### DETAILED DESCRIPTION OF THE INVENTION

The present invention now will be described more fully hereinafter with reference to the accompanying drawings, in which some, but not all embodiments of the inventions are shown. Indeed, this invention may be embodied in many different forms and should not be construed as limited to the embodiments set forth herein. Rather, these embodiments are provided so that this disclosure will satisfy applicable legal requirements. Like numbers refer to like elements throughout the several figures of the drawings.

The present invention relates to the field of fiber reinforced polymer composites comprising a matrix polymer and a reinforcing fiber that is uniformly dispersed within the matrix polymer. The matrix polymer can be a thermoplastic polymer (e.g., a polyolefin, polyester, polyamide, acrylic, polycarbonate or polyetherketone, with polypropylene being preferred). The matrix polymer can also be a thermosetting polymer (e.g., a polyester, vinyl ester, or epoxy). The reinforcing fiber can be a synthetic fiber produced or derived from an organic polymer or a natural cellulose-based fiber and which is initially produced in the form of continuous filament multifilament strands, rovings, or yarns and converted into short cut-fiber bundles as described more fully below. Examples of synthetic fibers produced from organic polymers include polyester, including polyethylene terephthalate (PET), polybutylene terephthalate (PBT), polytrimethylene terephthalate (PTT), polyethylene napthalate (PEN), polyethylene bibenzoate (PEBB), polylactic acid (PLA) and others, liquid crystal polymers, rayon, cellulose acetate, cellulose triacetate, polyamides such as nylon 6 and nylon 6,6 but not excluding other nylons, polyketones, polyetherketones, acrylics, aramids, or blends thereof. Examples of synthetic fibers derived from organic polymers also include carbon fibers and partially oxidized polyacrylonitrile fibers. Examples of natural cellulose-based fibers include bast fibers (flax, hemp, jute, ramie), leaf (sisal, manila), and seed hair (cotton, kapok). Preferably, the melting temperature of the reinforcing fiber should be at least 30° C above the processing temperature of the matrix polymer. In a preferred embodiment the matrix polymer is polypropylene, and the reinforcing fiber is polyester, preferably polyethylene terephthalate (PET) and more preferably a high tenacity PET fiber with a tenacity of at least 55 cN/tex.

The reinforcing fiber is provided in a form that feeds uniformly to a compounding process using conventional volumetric (loss-in-volume) or gravimetric (loss-in-weight) metering devices, yet disperses and becomes uniformly distributed in a matrix resin during the compounding process. Volumetric and gravimetric metering devices, and in particular volumetric and gravimetric screw feeders, are commercially available from a number of manufacturers, including Acrison International, AccuRate/Schenck, Brabender, K-Tron, Hapman and Stock.

The reinforcing fibers are provided in the form of cut fiber bundles with a finish composition coating the fibers and forming fugitive inter-fiber bonds within each cut fiber bundle. The term "fugitive bond" refers to an inter-fiber bond that is temporary or transitory. It provides inter-fiber coherency to the cut fiber bundle so that a loose mass or pile of the cut fiber bundles can be fed uniformly a loss-in-volume or loss-in-weight screw feeder device to a compounding process. However, upon mixing in the compounding process with a matrix polymer, the fugitive bonds break, e.g., the majority and preferably substantially all of the fugitive bonds break, and the cut fiber bundles disintegrate into separate individual fibers dispersed in the matrix polymer. The individual fibers which result from the disintegration of the cut fiber bundles will, of course, be no longer in length than the length of the bundles themselves. Preferably, substantially all of such individual fibers will be the same length as the length of the bundles from which they come as the bundles disintegrate.

The cut fiber bundles comprise a plurality of synthetic organic fibers of the same length oriented substantially parallel to one another and having their ends coextensive with one another. A finish composition coats the fibers and forms the fugitive inter-fiber bonds within each cut fiber bundle. Each cut fiber bundle has a length between 3 and 15 mm. preferably from 6 to 12 mm. Preferably, each cut fiber bundle contains from 100 to 400 individual fibers. The cut fiber bundles, when deposited by gravity and without compression, form a flowable mass having an average bulk density of at least 0.26 g/cm³ (16 pounds per cubic foot) more desirably at least (20 pounds per cubic foot) when measured by the Fiber Flowability Test procedure 0.32 g/cm³ described herein. In contrast, unsized cut fiber has a considerably lower bulk density, typically on the order of 0.16 to 0.22 g/cm³ to 14 pounds per cubic foot).

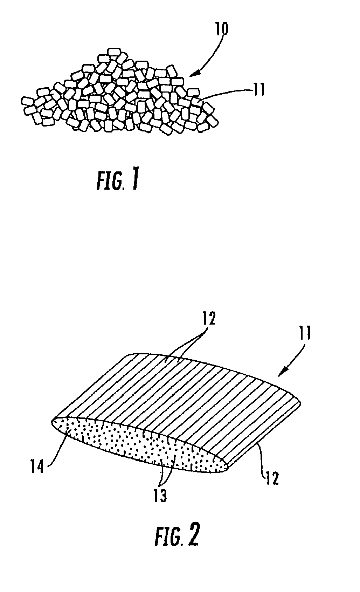

In FIG. 1, reference character 10 generally indicates a mass or pile of cut fiber bundles 11 in accordance with the present invention. In FIG. 2, one of the cut fiber bundles 11 is shown schematically at a larger scale. Each cut fiber bundle includes a plurality of synthetic organic fibers 12 of the same length oriented substantially parallel to one another and having their ends 13 substantial coextensive with one another. A finish composition 14 coats the fibers and forms fugitive inter-fiber bonds within the cut fiber bundle 11. The finish composition 14 is present along the outer surfaces of the cut fiber bundle and also penetrates into the interior of the bundle, bridging between many of the individual fibers to form the fugitive inter-fiber bonds. Preferably the finish composition surrounds and wets out many of the fibers. The finish composition is present in an amount from 0.5 to 10 weight percent based on the total weight of the coated fibers, and more preferably from 2 to 6 weight percent. In the embodiment shown, the fibers of the cut fiber bundles are adhered to one another in the form of a generally oval or flattened ribbon-like cross section.

The finish composition and process of the present invention produces cut fiber bundles which exhibit uniform loss-in-weight or loss-in-volume metering into plastics compounding processes. The fibers have bundle integrity for feeding, yet disperse well in the mixing step. The finish composition should possess the properties of good thermal stability and fiber lubrication necessary for fiber manufacturing and should neither off-gas nor interfere with the resin compounding and should not be detrimental to the properties of the final molded resin compound. In cases where improved impact resistance is desired, the finish composition should not promote adhesion between the fiber and the matrix resin.

The finish composition will preferably include a thermoplastic polymer which can be in the form of a solution or emulsion. Suitable thermoplastic polymer compositions may include, but are not limited to, thermoplastic polymer emulsions and solutions containing polyvinyl alcohols, polyacrylic acids and acrylic esters, polyesters, polyamides, thermoplastic polyurethanes, starches, waxes, polyvinyl acetates, silicone compositions, fluoro-chemical or combinations of two or more of these. Particularly preferred finish compositions include polyacrylic acids, polyesters and thermoplastic polyurethanes. The finish composition can also contain antistatic additives, adhesion promoters or tint.

The cut fiber bundles are produced by applying the finish composition to continuous multifilament strands and subsequently cutting the strands to form the cut fiber bundles. The term "continuous multifilament strands" as used herein refers to strands formed by a plurality of continuous filaments which are grouped together to form each strand. Such strands are commonly referred to as "filament yarns" or "multifilament yarns". The strands can have no twist but can contain air-interlaced filaments. Each strand or yarn preferably contains from 100 to 400 continuous filaments, with each filament having a linear mass of from 5 to 22 dtex per filament, with the strand having an overall linear density of 500 to 8800 dtex, preferably about 1000 to 4000 dtex and more preferably about 1300 to 3000 dtex. In the case of natural cellulose based fibers, the fibers are generally first converted into a low twist roving or twisted yarn which is then processed in the manner of the organic polymer strands.

The finish composition can be applied using standard equipment found in other textile processing operations. For example, the strands can be coated using a slashing or warp draw process similar to that conventionally employed for applying sizing to warp yarns in preparation for weaving. Wound packages, bobbins or beams containing spun multifilament yarn are arranged on a creel. The yarns are withdrawn from the packages, bobbins or beams, directed through a comb-like guide to form a warp sheet, and are then advanced successively through a coating station where the finish composition is applied, and a drying station, such as a heated oven, where the finish composition is dried. The coating station may, for example, comprise a bath through which the sheet of yarns is immersed. The thus-coated yarns can be kept in the form of a sheet and wound onto a warp beam, or the yarns can be individually wound into packages or on bobbins. The warp draw process can operate with 150 to 250 individual spun yarns at a process speed of 250 to 500 meters per minute. In a subsequent step, the coated yarns can be unwound and directed through a cutter which cuts them into the individual cut-fiber bundles.

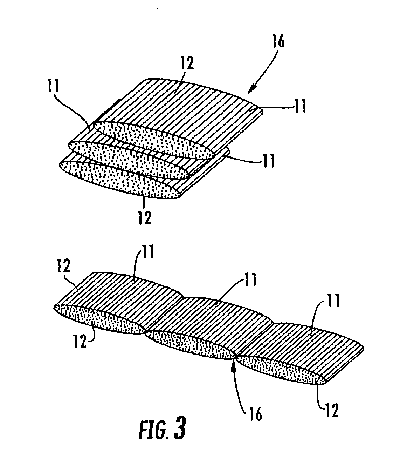

In the event that a slasher is used, packages or bobbins of yarn can be creeled and wound onto section beams. Multiple section beams can be run through the slasher sizing process and wound onto a master beam. Fiber from one or more master beams can be cut together into cut fiber bundles and packaged. In this manner, each step can be optimized for speed and productivity. When the yarns are coated with finish composition by this process, two or more adjacent contacting yarns may become lightly bonded to one another by the finish composition during the drying step. When the conjoined yarns are either continuously or subsequently cut into discrete lengths by the cutter, the resulting cut fiber bundles 11 may remain conjoined, producing clusters of two, three or more conjoined cut fiber bundles. Several possible configurations of such clusters are shown in FIG. 3 and indicated by the reference number 16. These conjoined clusters 16 of cut fiber bundles 11 can advantageously increase the bulk density and improve feedability of the cut fiber bundles. The conjoined cut fiber bundles will be broken apart by the action of the compounding process, allowing the individual fibers of each cut fiber bundle to disperse in the resin matrix within the compounding process.

In another approach, the finish composition can be applied to the yarns in an in-line spin-draw process as the yarns are being produced. In this process, each yarn is individually spun, drawn, heat set, and wound on bobbins at a final speed of 3,000 to 6,000 meters per minute. After fiber extrusion and before winding the yarn into wound packages, bobbins or beams, the finish composition is applied and dried by heating.

The finish composition can also be applied to yarns in combination with the cutting step. In this case, many ends of yarn are creeled together and fed to a fiber cutter. As the yarns are advanced toward the cutter, they pass through a coating station where the finish composition is applied, and then pass through a drying station before being fed to the cutter.

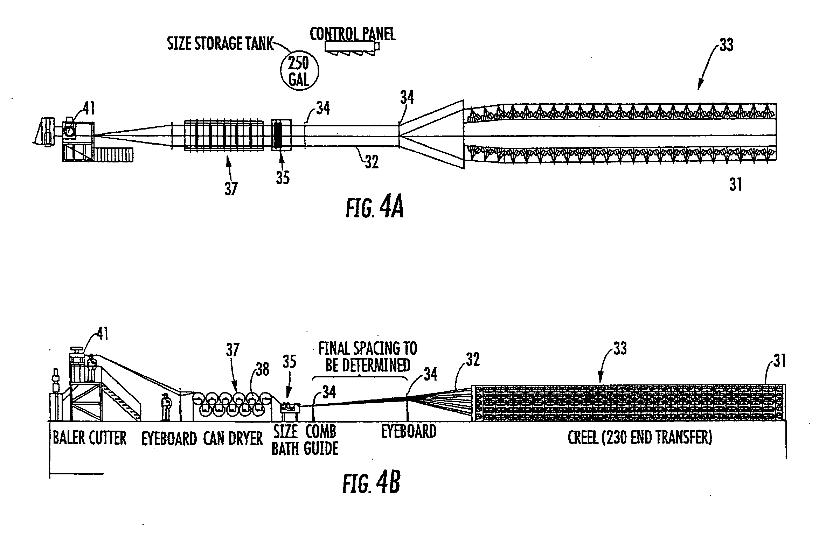

Figs. 4A and 4B schematically illustrate one possible arrangement of apparatus for producing cut fiber bundles in accordance with the present invention. Wound packages 31 of multifilament yarn 32 are arranged on a creel 33. A yarn 32 is unwound from each package and directed by suitable guides 34 to a coating station 35. In the illustrated embodiment, the coating station takes the form of a size bath. The size bath includes an open container or tub containing a finish composition and including guide rolls arranged so that the advancing yarns are immersed in and pulled through the finish composition. The yarns then advance from the coating station 35 through a drying station 37 including series of heated drying cans 38 which dry the finish composition on the yarns. The yarns are then advanced into and through a yarn cutter device 41 where each yarn is cut into short lengths to form the cut fiber bundles. The cut fiber bundles are collected in a suitable bulk container located beneath the cutter device 41.

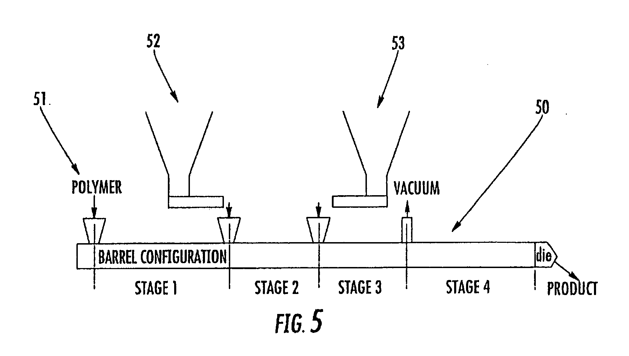

In Fig. 5, a typical twin-screw compounding extruder is indicated by the reference character 50. Thermoplastic polymer in granular chip or pellet form is fed to the barrel of the extruder via a main feed hopper 51. First and second loss-in-weight screw feeder devices 52 and 53 are connected to the extruder 50 for metering materials into the extruder barrel a short distance downstream from the introduction of the thermoplastic polymer granules. The cut fiber bundles of the present invention can be placed in the hopper of the first feeder device 52 and the second feeder device 53 can be used for introducing other solid materials, such as talc or other filler, into the extruder. Alternatively, the sequence of introducing the cut fiber bundles and the other solid materials, e.g. talc, can be reversed, or each can be metered from separate feed hoppers, mixed together, and fed into a single port of the compounding extruder.

The screw feeder devices 52 and 53 have variable speed screw augers which are programmed to control the feed rate of the material from the hopper. This kind of feeder device has no problem feeding hard materials such as polymer pellets, powder fillers and chopped glass fiber. However, less dense materials such as synthetic polymer fibers tend to "bridge", that is, form a wad of fibers that causes intermittent or complete blockage to fiber flow. Observation shows that bridging can be influenced by multiple factors. Among these are average fiber bulk density, loss in density from fiber handling, the amount of fluff fiber versus fiber bundles, fiber compressibility, bundle size and bundle integrity, bundle-to-bundle cohesion, and fiber-to-metal slickness. The type and amount of a chosen fiber sizing agent applied to the cut fiber bundles can be advantageously utilized to change one or more of these factors to thereby provide cut fiber bundles that will form a "flowable mass" which avoids bridging and thus can be uniformly fed through screw feeder devices of this type.

### Fiber Flowability Test

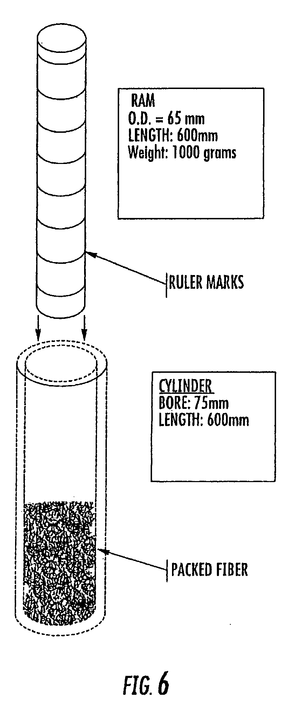

The ability of the cut fiber bundles of the present invention to flow can be measured by a simple laboratory test which provides conditions similar to those found in a screw-fed volumetric or gravimetric feeder. A fiber flowability test apparatus is illustrated in FIG. 6 and consists of an open-ended cylindrical tube having an inside diameter of 75mm and a length of 600mm and a cylindrical ram having an outside diameter of 65mm, a length of 600mm and a weight of 1000 grams. The tube has a smooth interior surface and may suitably be constructed from a nominal 7.6 cm (3 inch) diameter PVC plastic pipe. The ram may suitably be constructed from a nominal 5.1 cm (2 inch) diameter PVC plastic pipe fitted with a face plate of a diameter slightly less than the inside diameter of the 7.6 cm (3 inch) pipe.

The test procedure is as follows: (1) With the cylindrical tube standing upright on a surface, fill the tube with 300 grams of loose fiber. Representative tufts of the loose fiber are manually dropped into the tube. (2) Measure the height of the loose fiber in the tube and calculate the bulk density. (3) Tamp the fiber 5 times using the falling force of the 1000 gram ram released from a height level with the top of the tube. (4) Measure the tamped height of the fiber and calculate the bulk density. (5) Lift the cylindrical tube from a hard surface to permit free-flowing fiber to drop out of the bottom of the tube. (6) Measure the weight of any fiber which does not drop out the bottom. The gram mass of fiber retained in the tube is called fiber "Hold-Up". The "Hold-Up" can also be expressed as a percentage of the initial fiber charge.

The underlying theory of the test apparatus is that fiber in the throat of the hopper of a screw feeder device is compressed by the weight of the fiber above. The 75mm diameter of the tube corresponds generally to the distance between the flights of the feed auger in a typical screw feeder device. During the test, the fiber is compressed by a ram and the ability of the entire fiber charge to flow through the pipe is measured. Fiber that is held within the cylinder is considered "bridging" fiber.

The invention may be further illustrated by the following non-limiting examples.

### Example 1

**INVISTA** T787 polyester yarns (1300 denier/192 filaments, 7.5 dtex per filament; 69 cN/tex tenacity, 26% breaking elongation) were coated at varying solids levels with several sizing agents as described in Table 1. The sizing agents included a Rhoplex B-85 acrylic emulsion from Rohm & Haas, a polyvinyl alcohol sizing agent (Elvanol from DuPont), an acrylic acid homopolymer (Syncol F40 from Huntsman Textile Effects), a polyester size (SeycoFilm 712 from Seydel -Wooley), and a water-based thermoplastic polyurethane emulsion (U2-01 from Hydrosize). After coating, the yarns were cut to nominal 6mm length. Control samples containing similar cut fiber bundles of the uncoated yarns were also produced. The test procedure described above was carried out on the control samples and on the sized samples, and the results are reported in Table 1.

**Table 1**

| Flowability Results from Sized and Unsized Yarns | | | | | | | | | | |
|---|---|---|---|---|---|---|---|---|---|---|
| Test | Material | | Initial Height cm | Bulk Density, g/cm³ | Bulk density, lb/ft³ | Tamped Height, cm | Bulk Density g/cm³ | Tamped Bulk Density lb/ft³ | Hold Up, g | % Hold Up |
| 1 | Unsized | | 37 | 0.184 | 11.4 | 17 | 0.399 | 24.9 | 65 | 22% |
| 2 | Unsized | | 39 | 0.174 | 10.9 | 17 | 0.399 | 24.9 | 98 | 33% |
| 3 | Unsized | | 36 | 0.189 | 11.8 | 15 | 0.453 | 28.2 | 23 | 8% |
| 4 | Unsized | | 35 | 0.194 | 12.1 | 15 | 0.453 | 28.2 | 240 | 80% |
| 5 | Unsized | | 30 | 0.226 | 14.1 | 19 | 0.357 | 22.3 | 184 | 61% |
| 6 | Unsized | | 43 | 0.158 | 9.8 | 19 | 0.357 | 22.3 | 220 | 73% |
| 7 | Unsized | | 39 | 0.174 | 10.9 | 18 | 0.377 | 23.5 | 122 | 41% |
| 8 | Sized | 3% Rhoplex B-85 acrylic | 36 | 0.189 | 11.8 | 17 | 0.399 | 24.9 | 138 | 46% |
| 9 | Sized | 3% Elvanol 85-82 PVOH | 33 | 0.206 | 12.8 | 17 | 0.399 | 24.9 | 136 | 45% |
| 10 | Sized | 1% Hydrosize U2 polyurethane | 38 | 0.179 | 11.1 | 16 | 0.424 | 26.5 | 190 | 63% |
| 11 | Sized | 2% Hydrosize U2 polyurethane | 22 | 0.309 | 19.3 | 15 | 0.453 | 28.2 | 0 | 0% |
| 12 | Sized | 6% Hydrosize U2 polyurethane | 25 | 0.272 | 16.9 | 17 | 0.399 | 24.9 | 0 | 0% |
| 13 | Sized | 4% Syncol F40 polyacrylic | 24 | 0.283 | 17.6 | 16 | 0.424 | 26.5 | 0 | 0% |
| 14 | Sized | 2% Polyester Seycofilm 712 | 26 | 0.261 | 16.3 | 15 | 0.453 | 28.2 | 0 | 0% |

### Example 2

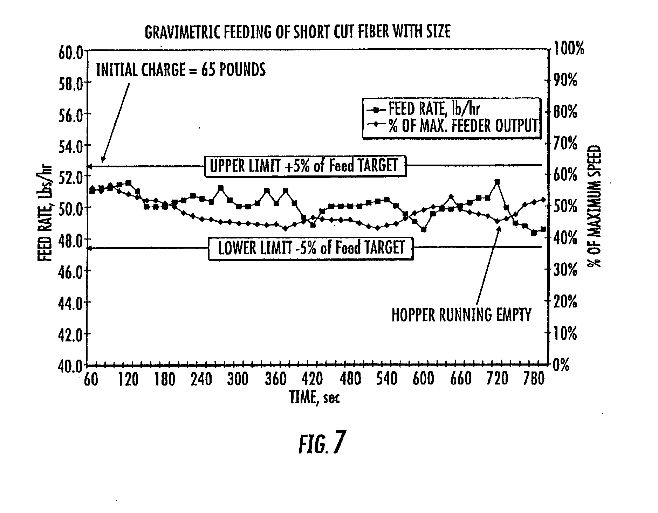

Fiber Samples 6, 10, and 12 from Table 1 were taken to the Polymer Center of Excellence located at the University of North Carolina- Charlotte. There the fibers were run through a Brabender FlexWall H32-FW79 feeder with a 44mm diameter auger. Sample 12 (6% Hydrosize U2-01) was run first. About 29.5 kg (65 pounds) of fiber were charged to the feed hopper and the feeder auger speed was set at 50% of maximum. At this speed, the feed rate of the fiber was about 6.3x10⁻³ kg/s (50 pounds per hour). The feeder was then programed to feed 6.3x10⁻³ kg/s (50 pounds per hour) in the automatic mode. FIG. 7 shows the variation in fiber feed rate and the % of maximum feeder speed for the fiber charge. The fiber feeder was able to deliver the fiber within a +/- 2.5% of the target rate at about a +/- 10 percent change in auger speed. By comparison, fiber Samples 6 and 10 were bulky and would not be delivered by the auger. Despite maximum feeder speed, no fiber was discharged.

## Claims

1. A fiber-containing composition suitable for compounding with a matrix polymer in a compounding process to form a fiber-reinforced polymer composite, said composition comprising a mass of cut fiber bundles, said mass having an average bulk density of at least 0.26 g/cm³ (16 pounds per cubic foot) and wherein substantially all of said cut fiber bundles have a length between 3 and 15 mm and comprise a plurality of synthetic or cellulose-based natural fibers of the substantially same length, oriented substantially parallel to one another and having their ends substantially coextensive with one another, and wherein substantially all of the cut fiber bundles further comprise a finish composition which coats fibers within the bundles and forms fugitive inter-fiber bonds within each cut fiber bundle to provide Inter-fiber coherency, said fugitive inter-fiber bonds being breakable upon compounding of said bundles in a compounding process such that said cut fiber bundles can disintegrate into separate individual fibers for dispersion within the matrix polymer during said process.

2. The composition of claim 1, wherein said mass of cut fiber bundles is flowable to the extent that said mass of bundles can be fed uniformly to a compounding process via a volumetric or a gravimetric screw feeder device.

3. The composition of claim 2, wherein the mass of cut fiber bundles is flowable to the extent that it can be uniformly fed via a volumetric screw feeder device requiring no more than a ± 10% change in feeder screw RPM or fed via a gravimetric screw feeder device requiring no more than a ± 10% change in weight variation during feeding.

4. The composition of claim 1, wherein the fibers of the cut fiber bundles have a linear mass of from 5 to 22 dtex.

5. The composition of claim 4, wherein the mass of cut fiber bundles contains an average of 100 to 400 fibers per cut fiber bundle.

6. The composition of claim 1, wherein the fibers of the cut fiber bundles are adhered to one another in the form of an oval or flattened ribbon-like cross section.

7. The composition of claim 1, wherein two or more of said cut fiber bundles within said mass of bundles are conjoined.

8. The composition of claim 1, wherein the finish composition comprises from 0.5 to 10 weight percent based on the total weight of the coated fibers within said cut fiber bundles.

9. The composition of claim 1, wherein the finish composition comprises from 2 to 6 weight percent based on the total weight of the coated fibers within said cut fiber bundles.

10. The composition of claim 9, wherein the finish composition comprises an aqueous-based thermoplastic polymer emulsion.

11. The composition of claim 10, wherein the finish composition is selected from the group consisting of polyvinyl alcohols, acrylic esters, polyacrylic acids, polyesters, polyamides, thermoplastic polyurethanes, starches, waxes, polyvinyl acetates, silicone compositions, fiuoro-chemicais, adhesion promoters, and combinations thereof.

12. The composition of claim 1, wherein the fibers within the bundles are synthetic fibers made of material selected from the group consisting of polyesters, liquid crystal polymers, polyamides, polyketones, polyetherketones, carbon, partially oxidized polyacrylonitrile, acrylics, aramids, and blends thereof.

13. The composition of claim 1, wherein the fibers within the bundles comprise thermoplastic polymer fibers comprising a polyester selected from the group consisting of polyethylene terephthalate, polyethylene napathalate, polytrimethylene terephthalate, polybutylene terephthalate, polyethylene bibenzoate, polylactic acid, and blends thereof.

14. The composition of claim 1, wherein the fibers within the bundles are natural cellulose-based fibers selected from the group consisting of bast fibers, leaf fibers, seed hair or combinations thereof.

15. The composition of claim 14, wherein the fibers within the bundles are selected from the group consisting of flax, hemp, jute, ramie, sisal, manila, cotton and kapok fibers.

16. A fiber-containing composition suitable for compounding with a thermoplastic or thermosetting matrix polymer in a compounding process to form a fiber-reinforced polymer composite, said composition comprising a mass of cut fiber bundles, said mass having an average bulk density of at least 0.26 g/cm³ (16 pounds per cubic foot), and wherein substantially all of said cut fiber bundles have a length between 3 and 15 mm and comprise per bundle from 100 to 400 polyethylene terephthalate fibers of the substantially the same length, oriented substantially parallel to one another and having their ends substantially coextensive with one another, and wherein substantially all of the cut fiber bundles further comprise from 0.5 to 10 weight percent of said bundle of a finish composition selected from the group consisting of polyvinyl alcohols, acrylic esters, polyacrylic acids, thermoplastic polyurethanes, starches, waxes, polyvinyl acetates, silicone compositions, fluoro-chemicals, adhesion promoters, and combinations thereof, which finish composition coats fibers within the bundles.

17. The composition of claim 16, wherein the finish composition comprises an aqueous-based thermoplastic polymer emulsion and is present in each bundle in an amount from 2 to 6 weight percent based on the total weight of the coated fibers.

18. A process for making bundles of reinforcing fiber suitable for providing fibers for eventual dispersion in a fiber reinforced polymer composite, said process comprising:
coating a plurality of multifilament strands produced or derived from synthetic organic polymer or cellulose-based natural fibers, with a finish composition that forms fugitive inter-filament bonds within the strands;
cutting the strands of bonded filaments into cut fiber bundles having a length between 3 and 15 mm, each cut fiber bundle containing a plurality of fugitively bonded fibers; and
forming a flowable mass of the individual cut fiber bundles such that said mass of bundles has an average bulk density of at least 0.26 g/cm³ (16 pounds per cubic foot).

19. The process of claim 18, wherein said step of coating a plurality of multifilament strands comprises directing a plurality of multifilament strands, each strand containing 100 to 400 continuous filaments and having a linear mass of from 5 to 22 dtex per strand, past a coating station containing a liquid finish composition, applying said liquid finish composition to the continuous multifilament strands at the coating station and impregnating said strands with the finish composition, and drying the finish composition to form fugitive inter-filament bonds within the strands.

20. The process of claim 19, wherein the drying step comprises directing the coated multifilament strands through an oven or over a series of heated drums, and wherein said cutting step comprises advancing the coated multifilament strands directly from said series of heated drums to a cutter device and cutting the strands into said cut fiber bundles.

21. The process of claim 18, wherein the coating step comprises applying the finish composition in an amount from 0.5 to 10 weight percent based on the total weight of the coated multifilament strands.

22. A process for providing reinforcing fiber for a fiber reinforced polymer composite, said reinforcing fiber being provided in the form of a mass of bundles of cut fibers, said process comprising:
withdrawing from a creel device a plurality of multifilament strands of polyethylene terephthalate polymer, each strand having a linear mass of from 5 to 22 dtex per filament and containing from 100 to 400 continuous filaments per strand;
advancing the plurality of multifilament strands from said creel device to and through a coating station and applying as a coating to the multifilament strands within said coating station a finish composition in the form of an aqueous emulsion of a thermoplastic polymer selected from the group consisting of polyvinyl alcohols, acrylic esters, polyacrylic acids, polyesters, polyamides, thermoplastic polyurethanes, starches, waxes, polyvinyl acetates, and combinations thereof;
advancing the coated multifilament strands from the coating station to a drying station and heating the strands within said drying station to cause the finish composition to dry and to form fugitive inter-filament bonds within each multifilament strand;
advancing said multifilament strands from the drying station to a cutting station and cutting the strands within said cutting station into cut fiber bundles having a length between 3 and 15 mm, each cut fiber bundle containing a plurality of fugitively bonded fibers; and
collecting said cut fiber bundles in a mass having an average bulk density of at least 0.26 g/cm³ (16 pounds per cubic foot).

23. The process of claim 22, wherein the step of heating the coated multifilament strands comprises directing the multifilament strands over a series of heated drying cans and drying the thermoplastic polymer emulsion while forming the strands into those having a ribbon-like strand cross-section.

24. The process of claim 23, wherein the step of drying the thermoplastic polymer emulsion while forming the strands into those of a ribbon-like strand cross section comprises drying the emulsion while at least some of the strands are in contact with one another so that at least some of the strands are adhered and conjoined to one another, and wherein the step of cutting the strands into cut fiber bundles comprises cutting the conjoined strands to form cut fiber bundles that are conjoined.

25. The process of claim 22, which includes the additional step of introducing said mass of cut fiber bundles into a volumetric or gravimetric screw feeder device and wherein said mass of cut fiber bundles is flowable to the extent that it can be uniformly fed via said volumetric screw feeder device requiring no more than a ± 10% change in feeder screw RPM or fed via said gravimetric screw feeder device requiring no more than a ± 10% change in weight variation during feeding.

26. A process for making a fiber reinforced polymer composite, which process comprises feeding a matrix polymer into a compounding process; depositing a flowable mass of cut fiber bundles comprising a composition of claim 1 into a feed hopper of a volumetric or gravimetric screw feeder device, said screw feeder device being in mass transport communication with said compounding process; feeding the flowable mass of cut fiber bundles into said compounding process via said screw feeder device, conducting said compounding process in a manner such that the fugitive bonds between fibers in said cut fiber bundles break and the cut fiber bundles thereby disintegrate into separate individual fibers no longer in length than the length of said bundles, said individual fibers being dispersed in the matrix polymer.

27. The process of claim 26, wherein said step of feeding the flowable mass of cut fiber bundles to said compounding process via said screw feeder device is carried out uniformly such that said volumetric screw feeder device requires no more than a ± 10% change in feeder screw RPM or such that said gravimetric screw feeder device requires no more than a ± 10% change in weight variation during feeding.

28. The process of claim 26 wherein said matrix polymer is a thermoplastic polymer and said compounding process is carried out in a single or twin screw extruder.

29. The process of claim 26 wherein said matrix polymer is a thermosetting polymer and said compounding process is carried out in a double armed batch mixer.

## Patentansprüche

1. Faserhaltige Zusammensetzung, die sich zum Vermischen mit einem Matrixpolymer in einem Mischprozeß zur Bildung eines faserverstärkten Polymerverbundstoffs eignet, wobei die Zusammensetzung eine Masse von Kurzfaserbündeln aufweist, wobei die Masse eine mittlere Schüttdichte von mindestens 0,26 g/cm³ (16 lb pro Kubikfuß) aufweist, und wobei im wesentlichen alle Kurzfaserbündel eine Länge zwischen 3 und 15 mm haben und eine Vielzahl von Synthesefasern oder Naturfasern auf Cellulosebasis von im wesentlichen gleicher Länge aufweisen, die im wesentlichen parallel zueinander orientiert sind und deren Enden im wesentlichen miteinander übereinstimmen, und wobei im wesentlichen alle Kurzfaserbündel ferner eine Appreturzusammensetzung aufweisen, mit der die Fasern innerhalb der Bündel beschichtet sind und die kurzlebige Zwischenfaserbindungen innerhalb jedes Kurzfaserbündels bildet, um für Zusammenhalt zwischen den Fasern zu sorgen, wobei die kurzlebigen Zwischenfaserbindungen beim Vermischen der Bündel in einem Mischprozeß lösbar sind, so daß sich die Kurzfaserbündel während des Verfahrens in getrennte Einzelfasern zur Dispersion innerhalb des Matrixpolymers auflösen können.

2. Zusammensetzung nach Anspruch 1, wobei die Masse von Kurzfaserbündeln in dem Maße fließfähig ist, daß die Bündelmasse über einen volumetrischen oder gravimetrischen Schneckendosierer gleichmäßig einem Mischprozeß zugeführt werden kann.

3. Zusammensetzung nach Anspruch 2, wobei die Masse von Kurzfaserbündeln in dem Maße fließfähig ist, daß sie über einen volumetrischen Schneckendosierer, der eine Änderung der Dosiererschneckendrehzahl von nicht mehr als ±10% erfordert, oder über einen gravimetrischen Schneckendosierer, der eine Gewichtsänderung während der Einspeisung von nicht mehr als ±10% erfordert, gleichmäßig zugeführt werden kann.

4. Zusammensetzung nach Anspruch 1, wobei die Fasern der Kurzfaserbündel eine lineare Masse von 5 bis 22 dtex aufweisen.

5. Zusammensetzung nach Anspruch 4, wobei die Masse der Kurzfaserbündel im Durchschnitt 100 bis 400 Fasern pro Kurzfaserbündel enthält.

6. Zusammensetzung nach Anspruch 1, wobei die Fasern der Kurzfaserbündel in Form eines ovalen oder abgeflachten bandähnlichen Querschnitts aneinander anhaften.

7. Zusammensetzung nach Anspruch 1, wobei zwei oder mehr der Kurzfaserbündel innerhalb der Bündelmasse miteinander verbunden sind.

8. Zusammensetzung nach Anspruch 1, wobei die Appreturzusammensetzung 0,5 bis 10 Gew.-% des Gesamtgewichts der beschichteten Fasern innerhalb der Kurzfaserbündel bildet.

9. Zusammensetzung nach Anspruch 1, wobei die Appreturzusammensetzung 2 bis 6 Gew.-% des Gesamtgewichts der beschichteten Fasern innerhalb der Kurzfaserbündel bildet.

10. Zusammensetzung nach Anspruch 9, wobei die Appreturzusammensetzung eine thermoplastische Polymeremulsion auf Wasserbasis aufweist.

11. Zusammensetzung nach Anspruch 10, wobei die Appreturzusammensetzung aus der Gruppe ausgewählt ist, die aus Polyvinylalkoholen, Acrylestern, Polyacrylsäuren, Polyestern, Polyamiden, thermoplastischen Polyurethanen, Stärken, Wachsen, Polyvinylacetaten, Silicon-Zusammensetzungen, Fluorchemikalien, Haftvermittlern und Kombinationen daraus besteht.

12. Zusammensetzung nach Anspruch 1, wobei die Fasern innerhalb der Bündel Synthesefasern aus einem Material sind, das aus der Gruppe ausgewählt ist, die aus Polyestern, Flüssigkristallpolymeren, Polyamiden, Polyketonen, Polyetherketonen, Kohlenstoff, teiloxidiertem Polyacrylnitril, Acrylharzen, Aramiden und Gemischen daraus besteht.

13. Zusammensetzung nach Anspruch 1, wobei die Fasern innerhalb der Bündel thermoplastische Polymerfasern mit einem Polyester aufweisen, der aus der Gruppe ausgewählt ist, die aus Polyethylenterephthalat, Polyethylennaphthalat, Polytrimethylenterephthalat, Polybutylenterephthalat, Polyethylenbibenzoat, Polymilchsäure und Gemischen daraus besteht.

14. Zusammensetzung nach Anspruch 1, wobei die Fasern innerhalb der Bündel Naturfasern auf Cellulosebasis sind, die aus der Gruppe ausgewählt sind, die aus Bastfasern, Blattfasern, Samenhaar oder Kombinationen daraus besteht.

15. Zusammensetzung nach Anspruch 14, wobei die Fasern innerhalb der Bündel aus der Gruppe ausgewählt sind, die aus Flachs-, Hanf-, Jute-, Ramie-, Sisal-, Manilahanf-, Baumwoll- und Kapokfasern besteht.

16. Faserhaltige Zusammensetzung, die sich zum Vermischen mit einem thermoplastischen oder hitzehärtbaren Matrixpolymer in einem Mischprozeß zur Bildung eines faserverstärkten Polymerverbundstoffs eignet, wobei die Zusammensetzung eine Masse von Kurzfaserbündeln aufweist, wobei die Masse eine mittlere Schüttdichte von mindestens 0,26 g/cm³ (16 lb pro Kubikfuß) aufweist, und wobei im wesentlichen alle Kurzfaserbündel eine Länge zwischen 3 und 15 mm haben und pro Bündel 100 bis 400 Polyethylenterephthalatfasern von im wesentlichen gleicher Länge aufweisen, die im wesentlichen parallel zueinander orientiert sind und deren Enden im wesentlichen miteinander übereinstimmen, und wobei im wesentlichen alle Kurzfaserbündel ferner, bezogen auf das Bündel, 0,5 bis 10 Gew.-% einer Appreturzusammensetzung aufweisen, die aus der Gruppe ausgewählt ist, die aus Polyvinylalkoholen, Acrylestern, Polyacrylsäuren, thermoplastischen Polyurethanen, Stärken, Wachsen, Polyvinylacetaten, Silicon-Zusammensetzungen, Fluorchemikalien, Haftvermittlern und Kombinationen daraus besteht, wobei die Appreturzusammensetzung Fasern innerhalb der Bündel beschichtet.

17. Zusammensetzung nach Anspruch 16, wobei die Appreturzusammensetzung eine thermoplastische Polymeremulsion auf Wasserbasis aufweist und in jedem Bündel in einem Anteil von 2 bis 6 Gew.-%, bezogen auf das Gesamtgewicht der beschichteten Fasern, anwesend ist.

18. Verfahren zur Herstellung von Verstärkungsfaserbündeln, die sich zur Bereitstellung von Fasern zur schließlichen Dispersion in einem faserverstärkten Polymerverbundstoff eignen, wobei das Verfahren aufweist:
Beschichten einer Vielzahl von Multifilsträngen, die aus synthetischem organischem Polymer oder Naturfasern auf Cellulosebasis gewonnen werden oder davon abgeleitet sind, mit einer Appreturzusammensetzung, die kurzlebige Zwischenfaserbindungen innerhalb der Stränge bildet;
Schneiden der Stränge aus gebundenen Filamenten zu Kurzfaserbündeln mit einer Länge zwischen 3 und 15 mm, wobei jedes Kurzfaserbündel eine Vielzahl von kurzlebig gebundenen Fasern enthält; und
Formen einer fließfähigen Masse aus den einzelnen Kurzfaserbündeln, so daß die Masse eine mittlere Schüttdichte von mindestens 0,26 g/cm³ (16 lb pro Kubikfuß) aufweist.

19. Verfahren nach Anspruch 18, wobei der Schritt zum Beschichten einer Vielzahl von Multifilsträngen aufweist: Vorbeiführen einer Vielzahl von Multifilsträngen, wobei jeder Strang 100 bis 400 Endlosfilamente enthält und eine lineare Masse von 5 bis 22 dtex pro Strang aufweist, an einer Beschichtungsstation, die eine flüssige Appreturzusammensetzung enthält, Auftragen der flüssigen Appreturzusammensetzung auf die Endlosfilamentstränge an der Beschichtungsstation und Imprägnieren der Stränge mit der Appreturzusammensetzung und Trocknen der Appreturzusammensetzung, um kurzlebige Zwischenfaserbindungen innerhalb der Stränge auszubilden.

20. Verfahren nach Anspruch 19, wobei der Trocknungsschritt das Durchleiten der beschichteten Multifilstränge durch einen Ofen oder über eine Reihe beheizter Trommeln aufweist, und wobei der Schneidschritt das Fördern der beschichteten Multifilstränge von der Reihe beheizter Trommeln direkt zu einer Schneidvorrichtung und Zuschneiden der Stränge zu den Kurzfaserbündeln aufweist.

21. Verfahren nach Anspruch 18, wobei der Beschichtungsschritt das Auftragen der Appreturzusammensetzung in einem Anteil von 0,5 bis 10 Gew.-% aufweist, bezogen auf das Gesamtgewicht der beschichteten Multifilstränge.

22. Verfahren zum Bereitstellen von Verstärkungsfaser für einen faserverstärkten Polymerverbundstoff, wobei die Verstärkungsfaser in Form einer Masse von Kurzfaserbündeln bereitgestellt wird, wobei das Verfahren aufweist:
Entnahme einer Vielzahl von Multifilsträngen aus Polethylenterephthalat-Polymer aus einer Gattervorrichtung, wobei jeder Strang eine lineare Masse von 5 bis 22 dtex pro Filament aufweist und 100 bis 400 Endlosfilamente pro Strang enthält;
Fördern der Vielzahl von Multifilsträngen von der Gattervorrichtung zu einer und durch eine Beschichtungsstation und Auftragen einer Appreturzusammensetzung in Form einer wäßrigen Emulsion eines thermoplastischen Polymers, das aus der Gruppe ausgewählt ist, die aus Polyvinylalkoholen, Acrylestern, Polyacrylsäuren, Polyestern, Polyamiden, thermoplastischen Polyurethanen, Stärken, Wachsen, Polyvinylacetaten und Kombinationen daraus besteht, als Beschichtung auf die Multifilstränge innerhalb der Beschichtungsstation;
Fördern der beschichteten Multifilstränge von der Beschichtungsstation zu einer Trockenstation und Erhitzen der Stränge innerhalb der Trockenstation, um zu bewirken, daß die Appreturzusammensetzung trocknet und kurzlebige Zwischenfaserbindungen innerhalb jedes Multifilstrangs bildet;
Fördern der Multifilstränge von der Trockenstation zu einer Schneidstation und Schneiden der Stränge innerhalb der Schneidstation zu Kurzfaserbündeln mit einer Länge zwischen 3 und 15 mm, wobei jedes Kurzfaserbündel einer Vielzahl von kurzlebig gebundenen Fasern enthält; und
Sammeln der Kurzfaserbündel in einer Masse mit einer mittleren Schüttdichte von mindestens 0,26 g/cm³ (16 lb pro Kubikfuß).

23. Verfahren nach Anspruch 22, wobei der Schritt zum Erhitzen der beschichteten Multifilstränge aufweist: Lenken der Multifilstränge über eine Reihe von beheizten Trockenzylindern und Trocknen der thermoplastischen Polymeremulsion unter gleichzeitigem Formen der Stränge zu Strängen mit bandähnlichem Strangquerschnitt.

24. Verfahren nach Anspruch 23, wobei der Schritt zum Trocknen der thermoplastischen Polymeremulsion unter gleichzeitigem Formen der Stränge zu Strängen mit bandähnlichem Strangquerschnitt aufweist: Trocknen der Emulsion, während mindestens einige von den Strängen in Kontakt miteinander sind, so daß mindestens einige von den Strängen aneinander anhaften und miteinander verbunden werden, und wobei der Schritt zum Schneiden der Stränge zu Kurzfaserbündeln das Schneiden der verbundenen Stränge aufweist, um verbundene Kurzfaserbündel zu formen.

25. Verfahren nach Anspruch 22, das den zusätzlichen Schritt zum Einbringen der Kurzfaserbündelmasse in einen volumetrischen oder gravimetrischen Schneckendosierer aufweist, wobei die Kurzfaserbündelmasse in dem Maße fließfähig ist, daß sie über den volumetrischen Schneckendosierer, der eine Änderung der Dosiererschneckendrehzahl von nicht mehr als ±10% erfordert, oder über den gravimetrischen Schneckendosierer, der eine Gewichtsänderung während der Einspeisung von nicht mehr als ±10% erfordert, gleichmäßig zugeführt werden kann.

26. Verfahren zur Herstellung eines faserverstärkten Polymerverbundstoffs, wobei das Verfahren aufweist: Eintragen eines Matrixpolymers in einen Mischprozeß; Einbringen einer fließfähigen Kurzfaserbündelmasse, die eine Zusammensetzung nach Anspruch 1 aufweist, in einen Fülltrichter eines volumetrischen oder gravimetrischen Schneckendosierers, der in Massentransportverbindung mit dem Mischprozeß steht; Eintragen der fließfähigen Kurzfaserbündelmasse über den Schneckendosierer in den Mischprozeß, Durchführen des Mischprozesses auf eine solche Weise, daß sich die kurzlebigen Bindungen zwischen Fasern in den Kurzfaserbündeln lösen und die Kurzfaserbündel sich **dadurch** in getrennte Einzelfasern auflösen, die nicht länger als die Faserbündel sind, wobei die Einzelfasern in dem Matrixpolymer dispergiert werden.

27. Verfahren nach Anspruch 26, wobei der Schritt zum Eintragen der fließfähigen Kurzfaserbündelmasse in den Mischprozeß über den Schneckendosierer gleichmäßig so ausgeführt wird, daß der volumetrische Schneckendosierer eine Änderung der Dosiererschneckendrehzahl von nicht mehr als ±10% erfordert, oder so, daß der gravimetrische Schneckendosierer eine Gewichtsänderung während der Einspeisung von nicht mehr als ±10% erfordert.

28. Verfahren nach Anspruch 26, wobei das Matrixpolymer ein thermoplastisches Polymer ist und der Mischprozeß in einem Einzel- oder Doppelschneckenextruder ausgeführt wird.

29. Verfahren nach Anspruch 26, wobei das Matrixpolymer ein hitzehärtbares Polymer ist und der Mischprozeß in einem doppelarmigen Chargenmischer ausgeführt wird.

## Revendications

1. Composition contenant des fibres appropriée pour une combinaison avec un polymère de matrice dans un procédé de combinaison pour former un composite de polymère renforcé par fibre, ladite composition comprenant une masse de faisceaux de fibres coupées, ladite masse possédant une densité apparente moyenne d'au moins 0,26 g/cm³ (16 livres par pied cube) et dans laquelle presque tous lesdits faisceaux de fibres coupées possèdent une longueur entre 3 et 15 mm et comprennent une pluralité de fibres naturelles à base de cellulose ou synthétiques de substantiellement la même longueur, orientées substantiellement parallèles les unes aux autres et avec leurs extrémités substantiellement coextensives les unes aux autres et dans laquelle presque tous les faisceaux de fibres coupées comprennent en outre une composition de finition qui revêt les fibres à l'intérieur des faisceaux et forme des liaisons inter-fibre fugitives dans chaque faisceau de fibres coupées pour donner une cohérence inter-fibre, lesdites liaisons inter-fibre fugitives pouvant être rompues lors de la combinaison desdits faisceaux dans un procédé de combinaison de sorte que lesdits faisceaux de fibres coupées peuvent se désintégrer en fibres individuelles séparées pour une dispersion dans le polymère de matrice durant ledit procédé.

2. Composition selon la revendication 1, dans laquelle ladite masse de faisceaux de fibres coupées est apte à l'écoulement au point que ladite masse de faisceaux peut être alimentée uniformément vers un procédé de combinaison via un dispositif d'alimentateur à vis volumétrique ou gravimétrique.

3. Composition selon la revendication 2, dans laquelle la masse de faisceaux de fibres coupées est apte à l'écoulement au point qu'elle peut être uniformément alimentée via un dispositif d'alimentateur à vis volumétrique ne nécessitant pas plus d'un changement de ±10% dans la valeur de RMP de la vis de l'alimentateur ou alimentée via un dispositif d'alimentateur à vis gravimétrique ne nécessitant pas plus d'un changement de ±10% dans la variation de poids durant l'alimentation.

4. Composition selon la revendication 1, dans laquelle les fibres des faisceaux de fibres coupées possèdent une masse linéaire de 5 à 22 dtex.

5. Composition selon la revendication 4, dans laquelle la masse de faisceaux de fibres coupées contient une moyenne de 100 à 400 fibres par faisceau de fibres coupées.

6. Composition selon la revendication 1, dans laquelle les fibres des faisceaux de fibres coupées sont adhérées les unes aux autres sous la forme d'une section transversale ovale ou aplatie de type ruban.

7. Composition selon la revendication 1, dans laquelle deux ou plus desdits faisceaux de fibres coupées à l'intérieur de ladite masse de faisceaux sont aboutés.

8. Composition selon la revendication 1, dans laquelle la composition de finition comprend de 0,5 à 10 pour-cent en poids sur la base du poids total des fibres revêtues à l'intérieur desdits faisceaux de fibres coupées.

9. Composition selon la revendication 1, dans laquelle la composition de finition comprend de 2 à 6 pour-cent en poids sur la base du poids total des fibres revêtues à l'intérieur desdits faisceaux de fibres coupées.

10. Composition selon la revendication 9, dans laquelle la composition de finition comprend une émulsion de polymère thermoplastique à base aqueuse.

11. Composition selon la revendication 10, dans laquelle la composition de finition est choisie dans le groupe constitué d'alcools de polyvinyle, d'esters acryliques, d'acides polyacryliques, de polyesters, de polyamides, de polyuréthanes thermoplastiques, d'amidons, de cires, d'acétates de polyvinyle, de compositions de silicone, de composés fluoro-chimiques, de promoteurs d'adhérence et de combinaisons de ceux-ci.

12. Composition selon la revendication 1, dans laquelle les fibres à l'intérieur des faisceaux sont des fibres synthétiques composées d'un matériau choisi dans le groupe constitué de polyesters, de polymères de cristaux liquides, de polyamides, de polycétones, de polyéthercétones, de carbone, de polyacrylonitrile partiellement oxydé, d'acryliques, d'aramides et de mélanges de ceux-ci.

13. Composition selon la revendication 1, dans laquelle les fibres à l'intérieur des faisceaux comprennent des fibres de polymère thermoplastique comprenant un polyester choisi dans le groupe constitué de polyéthylène téréphtalate, de polyéthylène naphtalate, de polytriméthylène téréphtalate, de polybutylène téréphtalate, de polyéthylène bibenzoate, d'acide polylactique et de mélanges de ceux-ci.

14. Composition selon la revendication 1, dans laquelle les fibres à l'intérieur des faisceaux sont des fibres naturelles à base de cellulose choisies dans le groupe constitué de fibres corticales, de fibres de feuilles, de poil de graine ou de combinaisons de ceux-ci.

15. Composition selon la revendication 14, dans laquelle les fibres à l'intérieur des faisceaux sont choisies dans le groupe constitué de fibres de lin, de chanvre, de jute, de ramie, de sisal, d'abaca, de coton et de kapok.

16. Composition contenant des fibres appropriée pour une combinaison avec un polymère de matrice thermoplastique ou thermodurcissable dans un procédé de combinaison pour former un composite de polymère renforcé par fibre, ladite composition comprenant une masse de faisceaux de fibres coupées, ladite masse possédant une densité apparente moyenne d'au moins 0,26 g/cm³ (16 livres par pied cube) et dans laquelle presque tous lesdits faisceaux de fibres coupées possèdent une longueur entre 3 et 15 mm et comprennent par faisceau de 100 à 400 fibres de polyéthylène téréphtalate de substantiellement la même longueur, orientées substantiellement parallèles les unes aux autres et avec leurs extrémités substantiellement coextensives les unes aux autres et dans laquelle presque tous les faisceaux de fibres coupées comprennent en outre de 0,5 à 10 pour-cent en poids dudit faisceau d'une composition de finition choisie dans le groupe constitué d'alcools de polyvinyle, d'esters acryliques, d'acides polyacryliques, de polyuréthanes thermoplastiques, d'amidons, de cires, d'acétates de polyvinyle, de compositions de silicone, de composés fluoro-chimiques, de promoteurs d'adhérence et de combinaisons de ceux-ci, laquelle composition de finition revêt les fibres à l'intérieur des faisceaux.

17. Composition selon la revendication 16, dans laquelle la composition de finition comprend une émulsion de polymère thermoplastique à base aqueuse et elle est présente dans chaque faisceau dans une quantité de 2 à 6 pour-cent en poids sur la base du poids total des fibres revêtues.

18. Procédé pour la fabrication de faisceaux de fibres de renforcement appropriés pour donner des fibres pour une dispersion finale dans un composite de polymère renforcé par fibre, ledit procédé consistant:
à revêtir une pluralité de brins multi-filaments, produits à partir ou dérivés d'un polymère organique synthétique ou de fibres naturelles à base de cellulose, avec une composition de finition qui forme des liaisons inter-filament fugitives à l'intérieur des brins;
à couper les brins de filaments liés en faisceaux de fibres coupées possédant une longueur entre 3 et 15 mm, chaque faisceau de fibres coupées contenant une pluralité de fibres liées de façon fugitive; et
à former une masse apte à l'écoulement des faisceaux de fibres coupées individuelles de sorte que ladite masse de faisceaux possède une densité apparente moyenne d'au moins 0,26 g/cm³ (16 livres par pied cube).

19. Procédé selon la revendication 18, dans lequel ladite étape de revêtement d'une pluralité de brins multi-filaments consiste à diriger une pluralité de brins multi-filaments, chaque brin contenant de 100 à 400 filaments continus et possédant une masse linéaire de 5 à 22 dtex par brin, vers une station de revêtement contenant une composition de finition liquide, à appliquer ladite composition de finition liquide sur les brins multi-filaments continus à la station de revêtement et à imprégner lesdits brins avec la composition de finition et à sécher la composition de finition pour former des liaisons inter-filament fugitives à l'intérieur des brins.

20. Procédé selon la revendication 19, dans lequel l'étape de séchage consiste à diriger les brins multi-filaments revêtus à travers un four ou sur une série de tambours chauffés et dans lequel ladite étape de coupe consiste à faire avancer les brins multi-filaments revêtus directement depuis ladite série de tambours chauffés vers un dispositif de coupe et à couper les brins en lesdits faisceaux de fibres coupées.

21. Procédé selon la revendication 18, dans lequel l'étape de revêtement comprend l'application de la composition de finition dans une quantité de 0,5 à 10 pour-cent en poids sur la base du poids total des brins multi-filaments revêtus.

22. Procédé pour la production d'une fibre de renforcement pour un composite de polymère renforcé par fibre, ladite fibre de renforcement étant fournie sous la forme d'une masse de faisceaux de fibres coupées, ledit procédé consistant:
à retirer d'un dispositif de cantre une pluralité de brins multi-filaments de polymère de polyéthylène téréphtalate, chaque brin possédant une masse linéaire de 5 à 22 dtex par filament et contenant de 100 à 400 filaments continus par brin;
à faire avancer la pluralité de brins multi-filaments depuis le dispositif de cantre vers et à travers une station de revêtement et à appliquer en tant que revêtement sur les brins multi-filaments dans ladite station de revêtement une composition de finition sous la forme d'une émulsion aqueuse d'un polymère thermoplastique choisi dans le groupe constitué d'alcools de polyvinyle, d'esters acryliques, d'acides polyacryliques, de polyesters, de polyamides, de polyuréthanes thermoplastiques, d'amidons, de cires, d'acétates de polyvinyle et de combinaisons de ceux-ci;
à faire avancer les brins multi-filaments revêtus depuis la station de revêtement vers une station de séchage et à chauffer les brins dans ladite station de séchage pour entraîner la composition de finition à sécher et à former des liaisons inter-filament fugitives à l'intérieur de chaque brin multi-filament;
à faire avancer lesdits brins multi-filaments depuis la station de séchage vers une station de coupe et à couper les brins dans ladite station de coupe en faisceaux de fibres coupées possédant une longueur entre 3 et 15 mm, chaque faisceau de fibres coupées contenant une pluralité de fibres liées de façon fugitive; et
à récupérer lesdits faisceaux de fibres coupées en une masse possédant une densité apparente moyenne d'au moins 0,26 g/cm³ (16 livres par pied cube).

23. Procédé selon la revendication 22, dans lequel l'étape de chauffage des brins multi-filaments revêtus consiste à diriger les brins multi-filaments sur une série de cylindres sécheurs chauffés et à sécher l'émulsion de polymère thermoplastique tout en transformant les brins en ceux qui possèdent une section transversale de brin de type ruban.

24. Procédé selon la revendication 23, dans lequel l'étape de séchage de l'émulsion de polymère thermoplastique tout en transformant les brins en ceux qui possèdent une section transversale de brin de type ruban consiste à sécher l'émulsion tandis que au moins une partie des brins sont en contact les uns avec les autres de sorte qu'au moins une partie des brins sont adhérés et aboutés les uns aux autres et dans lequel l'étape de coupe des brins en faisceaux de fibres coupées consiste à couper les brins aboutés pour former des faisceaux de fibres coupées qui sont aboutés.

25. Procédé selon la revendication 22, qui inclut l'étape supplémentaire d'introduction de ladite masse de faisceaux de fibres coupées dans un dispositif d'alimentateur à vis volumétrique ou gravimétrique et dans lequel ladite masse de faisceaux de fibres coupées est apte à l'écoulement au point qu'elle peut être uniformément alimentée via ledit dispositif d'alimentateur à vis volumétrique ne nécessitant pas plus d'un changement de ±10% dans la valeur de RPM de la vis de l'alimentateur ou alimentée via ledit dispositif d'alimentateur à vis gravimétrique ne nécessitant pas plus d'un changement de ±10% dans la variation de poids durant l'alimentation.

26. Procédé pour la fabrication d'un composite de polymère renforcé par fibre, lequel procédé consiste à alimenter un polymère de matrice dans un procédé de combinaison; à déposer une masse apte à l'écoulement de faisceaux de fibres coupées comprenant une composition selon la revendication 1 dans une trémie d'alimentation d'un dispositif d'alimentateur à vis volumétrique ou gravimétrique, ledit dispositif d'alimentateur à vis étant en communication de transport de masse avec ledit procédé de combinaison; à alimenter la masse apte à l'écoulement de faisceaux de fibres coupées dans ledit procédé de combinaison via ledit dispositif d'alimentateur à vis; à conduire ledit procédé de combinaison de manière à ce que les liaisons fugitives entre les fibres dans lesdits faisceaux de fibres coupées se rompent et ainsi que les faisceaux de fibres coupées se désintègrent en fibres individuelles séparées ne dépassant pas en longueur la longueur desdits faisceaux, lesdites fibres individuelles étant dispersées dans le polymère de matrice.

27. Procédé selon la revendication 26, dans lequel ladite étape d'alimentation de la masse apte à l'écoulement de faisceaux de fibres coupées vers ledit procédé de combinaison via ledit dispositif d'alimentateur à vis est réalisée uniformément de sorte que ledit dispositif d'alimentateur à vis volumétrique ne nécessite pas plus d'un changement de ±10% dans la valeur de RPM de la vis de l'alimentateur ou de sorte que ledit dispositif d'alimentateur à vis gravimétrique ne nécessite pas plus d'un changement de ±10% dans la variation de poids durant l'alimentation.

28. Procédé selon la revendication 26, dans lequel ledit polymère de matrice est un polymère thermoplastique et ledit procédé de combinaison est réalisé dans une extrudeuse à une vis ou à deux vis.

29. Procédé selon la revendication 26, dans lequel ledit polymère de matrice est un polymère thermodurcissable et ledit procédé de combinaison est réalisé dans un mélangeur discontinu à deux bras.
